Europäisches Patentamt

European Patent Office

Office européen des brevets

(11) Veröffentlichungsnummer : **0 297 450 B1**

# EUROPÄISCHE PATENTSCHRIFT

(45) Veröffentlichungstag der Patentschrift :
10.07.91 Patentblatt 91/28

(51) Int. Cl.⁵ : **F16J 15/32**

(21) Anmeldenummer : 88110078.8

(22) Anmeldetag : 24.06.88

(54) **Dichtungsvorrichtung.**

(30) Priorität : 01.07.87 DE 8709094 U

(43) Veröffentlichungstag der Anmeldung :
04.01.89 Patentblatt 89/01

(45) Bekanntmachung des Hinweises auf die
Patenterteilung :
10.07.91 Patentblatt 91/28

(84) Benannte Vertragsstaaten :
AT BE CH DE ES FR GB IT LI NL SE

(56) Entgegenhaltungen :
EP-A- 0 207 703
DE-A- 2 027 242

(56) Entgegenhaltungen :
DE-A- 3 418 898
DE-C- 3 320 515
DE-U- 8 325 499
FR-A- 2 590 641
US-A- 3 814 445

(73) Patentinhaber : Fietz, Manfred
Müllersbaum 40
W-5093 Burscheid (DE)

(72) Erfinder : Fietz, Manfred
Müllersbaum 40
W-5093 Burscheid (DE)

(74) Vertreter : Paul, Dieter-Alfred, Dipl.-Ing.
Fichtestrasse 18
W-4040 Neuss 1 (DE)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Dichtungsvorrichtung zum Abdichten insbesondere gegen unter Druck stehende Flüssigkeiten zwischen sich relativ zueinander bewegenden Teilen mit folgenden Merkmalen :

(a)    die Dichtungsvorrichtung weist eine Ringnut mit Nutgrund, Nutseitenwandungen und Nutöffnung auf ;

(b)    in die Ringnut ist ein vorzugsweise aus PTFE bestehender Dichtungsring eingesetzt ;

(c)    der Dichtungsring hat eine etwas geringere Breite als die Ringnut ;

(d)    der Dichtungsring weist mehrere, im Querschnitt nebeneinander angeordnete und über die Nutöffnung vorstehende Dichtlippen auf ;

(e)    zwischen Nutgrund und Dichtungsring ist ein Spannring angeordnet, der auf den Dichtungsring eine radial nach innen gerichtete Spannkraft ausübt ;

(f)    der Querschnittsmittelpunkt des Spannrings ist gegenüber dem des Dichtungsrings in Breitenrichtung der Ringnut versetzt.

Eine solche Dichtungsvorrichtung ist in der DE-A-34 18 898 beschrieben. Sie weist eine Ringnut auf, in die ein Dichtungsring mit zwei vorstehenden Dichtlippen eingesetzt ist. Der Außendurchmesser des Dichtungsrings ist so bemessen, daß zum Nutgrund hin ein Ringraum frei bleibt, in dem ein als Rundschnurring ausgebildeter Spannring eingesetzt ist. Der Spannring ist zwischen den Nutseitenwandungen quer beweglich, wobei die radiale Kraftausübung auf den Dichtungsring im Bereich zwischen den beiden Dichtlippen erfolgt.

Diese Dichtungsvorrichtung ist nachteilig, weil der Abstand zwischen den Lippen so groß ist, daß das Mittelteil auf Grund der dort angreifenden Kraft des Spannrings nach unten gedrückt wird und die Dichtlippen auseinandergespreizt werden. Außerdem sind die auf die Dichtlippen wirkenden Kräfte nur gering. Beides hat eine schlechte Abdichtung zur Folge.

In der DE-C-33 20 515 und dem DE-U-83 25 499 sind Dichtungsanordnungen beschrieben, bei denen ebenfalls in Ringnuten Dichtungsringe eingesetzt sind, die durch Spannringe in Form von Rundschnurringen radial nach innen auf die Dichtfläche gedrückt werden. Die Dichtringe weisen jeweils zwei zur Dichtfläche hin offene U- bzw. V-förmige, umlaufende Nuten auf, die die mantelförmigen Dichtflächen des Dichtungsrings unterbrechen. Die jeweils verbleibenden äußeren Stege dienen dazu, ein Kippen zu vermeiden (DE-U-83 25 499) bzw. Schmutzpartikel aufzunehmen und die Dichtwirkung zu verbessern (DE-C-33 20 515). Die Spannringe dieser Dichtungsanordnungen sind so geformt, daß sie auch bei Anlage des Dichtungsrings an einer der Nutseitenwandungen ihre Lage relativ zum Dichtungsring behalten, d.h. auch dann zu diesem im wesentlichen mittig liegen.

Im Gegensatz zur Dichtungsanordnung nach der DE-A-34 18 898 wird hier also eine symmetrisch Zuordnung von Dichtungsring und Spannring bevorzugt. Damit konzentrieren sich die Spannkräfte auf die mittlere Dichtfläche. Die Stützwirkung der äußeren Dichtflächen muß dabei im wesentlichen durch das Material des Dichtungsrings selbst erbracht werden. Dies hat zur Folge, daß die Abdichtung auch bei diesen Dichtungsanordnungen unbefriedigend bleibt.

Der Erfindung liegt deshalb die Aufgabe zugrunde, eine Dichtungsvorrichtung der eingangs genannten Art so zu gestalten, daß bei stabiler Lage des Dichtungsrings eine bessere Abdichtung erzielt wird.

Diese Aufgabe wird erfindungsgemäß durch eine Dichtungsvorrichtung mit folgenden Merkmalen gelöst :

(g)    der Dichtungsring weist drei Dichtlippen auf ;

(h)    Dichtungsring und Spannring sind derart gestaltet, daß sich bei ihrer Anlage an derselben Nutseitenwandung die dieser Nutseitenwandung am nächsten liegenden beiden Dichtlippen in einer solchen Stellung befinden, daß die von dem Spannring ausgeübte Kraft im wesentlichen zu gleichen Teilen auf diese beiden Dichtlippen aufgeteilt ist.

Diese Dichtungsvorrichtung zeichnet sich dadurch aus, daß auch das Mittelteil des Dichtungsrings abgestützt ist, wobei die vom Spannring ausgeübte Kraft auf die mittlere und die auf der druckabgewandten Seite liegende äußere Dichtlippe verteilt wird. Dabei wird die Dichtfunktion in erster Linie von der mittleren Dichtlippe übernommen, während die äußere druckabgewandte Dichtlippe im wesentlichen als Stützlippe dient, um ein Kippen des Dichtungsrings zu vermeiden. Die zusätzliche, auf der druckzugewandten Seite angeordnete Dichtlippe ist demgegenüber entlastet und ermöglicht somit den Flüssigkeitseintritt in den Zwischenraum zwischen dieser und der mittleren Dichtlippe. Diese Flüssigkeit unterstützt die Schmierung der Dichtlippen.

In Ausbildung der Erfindung ist vorgesehen, daß die zwei äußeren Dichtlippen symmetrisch zur mittleren Dichtlippe angeordnet sind.

In weiterer Ausgestaltung der Erfindung ist vorgeschlagen, daß der Spannring zwischen den beiden Nutseitenwandungen beweglich ist und bei Anlage an jeder Nutseitenwandung die von ihm ausgeübte Kraft jeweils auf die dieser Nutseitenwandung am nächsten liegenden beiden Dichtlippen im wesentlichen zu gleichen Teilen aufgeteilt ist. Diese Ausbildung ermöglicht es, die Dichtungsvorrichtung unabhängig davon, von welcher Seite die Druckbeaufschlagung kommt, anzubringen oder auch wechselnden Druckbeaufschlagungen auszusetzen.

Besonders zweckmäßig ist es, zwischen den Dichtlippen V-förmige Ausnehmungen vorzusehen, wobei der Winkel zwischen den Dichtlippen weniger als 60° betragen soll. Auf diese Weise wird ein Auseinanderspreizen der Dichtlippen auf Grund der Belastung durch den Spannring weitestgehend vermieden. Bei höheren Drücken, also bei Drücken über 100 bar, sind größere Winkel zwischen 65° und 75° vorzuziehen, wobei die V-förmigen Ausnehmungen entsprechend weniger tief ausgebildet sein sollen.

Es ist ferner vorgesehen, daß die Winkelhalbierende der Ausnehmungen zur Dichtfläche hin zueinander konvergieren.

Des weiteren ist es von Vorteil, daß die beiden äußeren Dichtlippen zur Dichtfläche hin geneigte Außenseiten haben, da auf diese Weise ein Druckausgleich auf der druckzugewandten Seite des Dichtungsrings stattfindet, so daß die dortige Dichtlippe von dem herrschenden Druck nur gering beaufschlagt wird. Dabei sollten die Außenseiten der beiden äußeren Dichtlippen eine flachere Neigung haben als ihre Innenseiten.

Des weiteren ist gemäß der Erfindung vorgeschlagen, daß die mittlere Dichtlippe gegenüber den benachbarten Dichtlippen vorsteht. Dies begünstigt ein schnelles Einlaufen der Dichtung.

Der Spannring ist zweckmäßigerweise als Rundschnurring ausgebildet. Damit er in Breitenrichtung beweglich ist, sollte die Anlagefläche des Dichtungsrings parallel zum Nutgrund verlaufen, wobei Anlagefläche und Nutgrund zweckmäßigerweise eben ausgebildet sind.

Es ist des weiteren nach der Erfindung vorgesehen, daß die Seitenwandungen der Ringnut senkrecht zum Nutgrund verlaufen.

Schließlich ist vorgeschlagen, daß der Abstand zwischen Dichtungsring und Nutgrund geringer ist als die Querschnittserstreckung des Spannrings in radialer Richtung in entspanntem Zustand, so daß der Spannring in radialer Richtung verformt und damit eine zusätzliche Spannkraft auf den Dichtungsring ausgeübt werden.

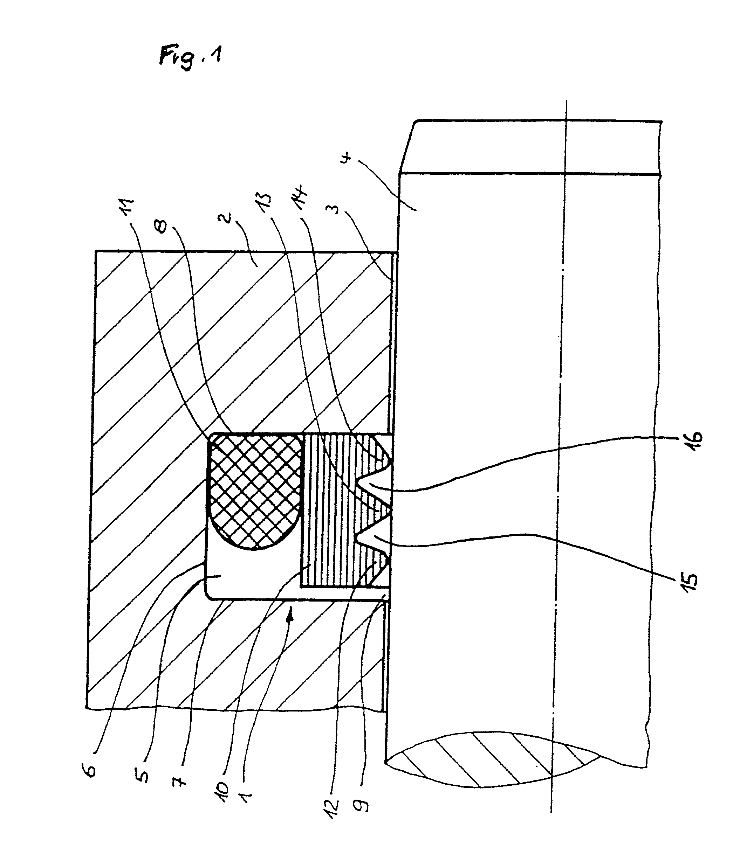

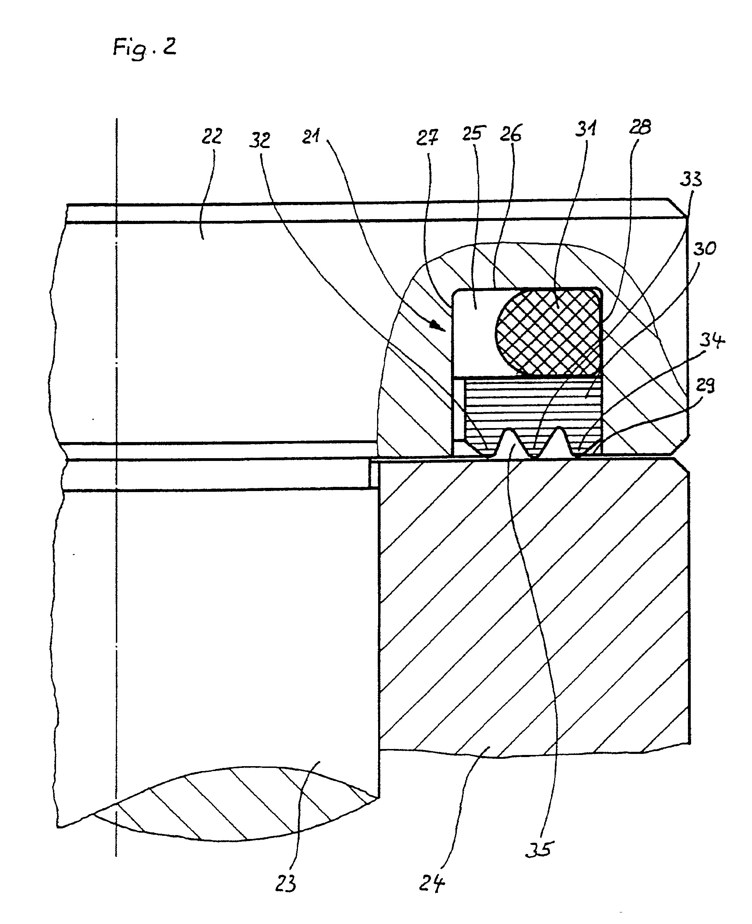

In der Zeichnung ist die Erfindung an Hand von zwei Ausführungsbeispielen näher veranschaulicht. Es zeigen :

Figur (1)      eine Dichtungsvorrichtung für eine Radialabdichtung und

Figur (2)      eine Dichtungsvorrichtung für eine axiale Abdichtung.

Die in Figur (1) dargestellte Dichtungsvorrichtung (1) ist in einem Gehäuse (2) angeordnet, in dessen Bohrung (3) eine im Querschnitt runde Stange (4) axial verschieblich läuft. Die Stange (4) kann beispielsweise die Kolbenstange eines Stoßdämpfers oder eines Hydraulikzylinders sein.

Die Dichtungsvorrichtung weist eine im Querschnitt rechteckige Ringnut (5) mit Nutgrund (6), den Nutseitenwandungen (7, 8) und der zur Bohrung (3) gerichteten Nutöffnung (9) auf. In die Ringnut (5) sind ein Dichtungsring (10) und in dem Zwischenraum zwischen Dichtungsring und Nutgrund (6) ein als Rundschnurring ausgebildeter Spannring (11) eingesetzt. Die Breite des Dichtungsrings (10) ist etwas geringer als die der Ringnut (6), so daß ein von der linken Seite her wirkender Druck den Dichtungsring (10) und den Spannring (11) gegen die in dieser Ansicht rechte Nutseitenwandung (8) preßt. Gleichzeitig übt der Spannring (11) eine radial auf die Stange (4) gerichtete Kraft auf den Dichtungsring (10) aus.

Der Dichtungsring weist innenseitig insgesamt drei Dichtlippen (12, 13, 14) auf, wobei die mittlere Dichtlippe (13) von den beiden äußeren Dichtlippen (12, 14) durch V-förmige Ausnehmungen (15, 16) getrennt ist. Die jeweiligen Innenseiten der beiden äußeren Dichtlippen (12, 4) verlaufen steiler als die Seiten der mittleren Dichtlippe (13) und auch als die Außenseiten der beiden äußeren Dichtlippen (12, 14).

Der Dichtungsring (10) und der Spannring (11) sind hinsichtlich ihrer Formgebung derart aufeinander abgestimmt, daß sich die vom Spannring (11) ausgeübte Radialkraft auf die mittlere und die rechte Dichtlippe (13, 14) gleichmäßig verteilt, während die linke Dichtlippe (12) von der Spannkraft entlastet ist. Hierdurch wird einerseits eine hohe Lagestabilität des Dichtungsring (10) erreicht, während andererseits die Ausnehmung (15) zwischen der linken und der mittleren Dichtlippe (12, 13) einen Speicherraum bildet, in den die abzudichtende Flüssigkeit eindringen kann, um die Schmierung der Dichtlippen (12, 13, 14) zu gewährleisten.

Bei Druckbeaufschlagung dieser Dichtungsvorrichtung (1) aus der umgekehrten Richtung, also von rechts, würden sich Spannring (11) und Dichtungsring (10) an der gegenüberliegenden Nutseitenwandung (7) anlegen. Auch in diesem Fall würde die vom Spannring (11) ausgeübte Radialkraft aufgeteilt, und zwar diesmal auf die Dichtlippen (12, 13), während die rechte Dichtlippe (14) entlastet und die Ausnehmung (16) als Speicherraum für die Druckflüssigkeit dienen würde.

Die in Figur (2) dargestellte Dichtungsvorrichtung (21) ist in der Abschlußplatte (22) eines Wellenstumpfes

3

(23) angeordnet. Der Wellenstumpf (23) sitzt innerhalb eines Gehäuses (24). Auch hier sind in eine rechteckige Ringnut (25) mit Nutgrund (26), Nutseitenwandungen (27, 28) und zur Stirnwand des Gehäuses (24) gerichteter Nutöffnung (29) ein Dichtungsring (30) und ein Spannring (31) eingesetzt. Der Spannring (31) liegt in dem Zwischenraum zwischen Nutgrund (26) und Dichtungsring (30) an der in dieser Ansicht rechten Nutseitenwandung (28) an. Der innere Durchmesser des Dichtungsrings (10) ist etwas größer als der Durchmesser der Nutseitenwandung (27), so daß von dieser Seite her Druck in den Zwischenraum zwischen Nutgrund (26) und Dichtungsring (30) wirken kann.

Der Dichtungsring (30) hat auch hier insgesamt drei Dichtlippen (32, 33, 34), deren Formgebung den in Figur (1) gezeigten Dichtlippen (12, 13, 14) entspricht. Die vom Spannring (31) ausgeübte Radialkraft verteilt sich auf die beiden äußeren Dichtlippen (13, 14) und bringt diese zur Anlage an die Stirnseite des Gehäuses (24). Dagegen ist die innere Dichtlippe (12) radialkraftentlastet, so daß Flüssigkeit in die Ausnehmung (35) zwischen den beiden inneren Dichtlippen (32, 33) eindringen kann, was die Schmierung der Dichtlippen (32, 33, 34) begünstigt.

## Patentansprüche

1. Dichtungsvorrichtung (1, 21) zum Abdichten insbesondere gegen unter Druck stehende Flüssigkeiten zwischen sich relativ zueinander bewegenden Teilen (2, 4 ; 22, 24) ;

(a)  die Dichtungsvorrichtung (1, 21) weist eine Ringnut (5, 25) mit Nutgrund (6, 26), Nutseitenwandungen (7, 8 ; 27, 28) und Nutöffnung (9, 29) auf ;

(b)  in die Ringnut (5, 25) ist ein vorzugsweise aus PTFE bestehender Dichtungsring (10, 30) eingesetzt ;

(c)  der Dichtungsring (10, 30) hat eine etwas geringere Breite als die Ringnut (5, 25) ;

(d)  der Dichtungsring (10, 30) weist mehrere, im Querschnitt nebeneinander angeordnete und über die Nutöffnung vorstehende Dichtlippen (12, 13, 14 ; 32, 33, 34) auf ;

(e)  zwischen Nutgrund (6, 26) und Dichtungsring (10, 30) ist ein Spannring (11, 31) angeordnet, der auf den Dichtungsring (10, 30) eine radial nach innen gerichtete Spannkraft ausübt ;

(f)  der Querschnittsmittelpunkt des Spannrings (11, 31) ist gegenüber dem des Dichtungsrings (10, 30) in Breitenrichtung der Ringnut (5, 25) versetzt ; gekennzeichnet durch folgende Merkmale :

(g)  der Dichtungsring (10, 30) weist drei Dichtlippen auf (12, 13, 14 ; 32, 33, 34) auf ;

(h)  Dichtungsring (10, 30) und Spannring (11, 31) sind derart gestaltet, daß sich bei ihrer Anlage an derselben Nutseitenwandung (8, 28) die dieser Nutseitenwandung (8, 28) am nächsten liegenden beiden Dichtlippen (13, 14 ; 33, 34) in einer solchen Stellung befinden, daß die von dem Spannring (11, 31) ausgeübte Kraft im wesentlichen zu gleichen Teilen auf diese beiden Dichtlippen (13, 14 ; 33, 34) aufgeteilt ist.

2. Dichtungsvorrichtung nach Anspruch 1, dadurch gekennzeichnet, daß die zwei äußeren Dichtlippen (12, 14 ; 32, 34) symmetrisch zur mittleren Dichtlippe (13, 33) angeordnet sind.

3. Dichtungsvorrichtung nach Anspruch 1 oder 2, dadurch gekennzeichnet, daß der Spannring (11) zwischen den beiden Nutseitenwandungen (7, 8) beweglich ist und bei Anlage an jeder Nutseitenwandung (7, 8) die von ihm ausgeübte Kraft jeweils auf die dieser Nutseitenwandung (7, 8) am nächsten liegenden, beiden Dichtlippen (13, 14) im wesentlichen zu gleichen Teilen aufgeteilt ist.

4. Dichtungsvorrichtung nach einem der Ansprüche 1 bis 3, dadurch gekennzeichnet, daß zwischen den Dichtlippen (12, 13, 14 ; 32, 33, 34) V-förmige Ausnehmungen (15, 16, 35) vorgesehen sind.

5. Dichtungsvorrichtung nach Anspruch 4, dadurch gekennzeichnet, daß der Winkel zwischen den Dichtlippen (12, 13, 14 ; 32, 33, 34) bei Beaufschlagung bis 100 bar geringer als 60° ist.

6. Dichtungsvorrichtung nach Anspruch 4, dadurch gekennzeichnet, daß der Winkel zwischen den Dichtlippen bei Beaufschlagung mit hohen Drücken größer als 60° ist.

7. Dichtungsvorrichtung nach einem der Ansprüche 4 bis 6, dadurch gekennzeichnet, daß die Winkelhalbierenden der Ausnehmungen (15, 16 ; 35) zueinander konvergieren.

8. Dichtungsvorrichtung nach einem der Ansprüche 1 bis 7, dadurch gekennzeichnet, daß die beiden äußeren Dichtlippen (12, 14 ; 32, 34) zur Dichtfläche hin geneigte Außenseiten haben ;

9. Dichtungsvorrichtung nach Anspruch 8, dadurch gekennzeichnet, daß die Außenseiten der beiden äußeren Dichtlippen (12, 14, 32, 34) eine flachere Neigung als ihre Innenseiten haben.

10. Dichtungsvorrichtung nach einem der Ansprüche 1 bis 9, dadurch gekennzeichnet, daß die mittlere Dichtlippe (13, 33) gegenüber den benachbarten Dichtlippen (12, 14 ; 32, 34) vorsteht.

11. Dichtungsvorrichtung nach einem der Ansprüche 1 bis 10, dadurch gekennzeichnet, daß der Spannring (11, 31) ein Rundschnurring ist.

12. Dichtungsvorrichtung nach einem der Ansprüche 1 bis 11, dadurch gekennzeichnet, daß die Anlagefläche des Dichtungsrings (10, 30) am Spannring (11, 31) parallel zum Nutgrund (6, 26) verläuft.

13. Dichtungsvorrichtung nach Anspruch 12, dadurch gekennzeichnet, daß Anlagefläche und Nutgrund (6, 26) eben ausgebildet sind.

14. Dichtungsvorrichtung nach einem der Ansprüche 1 bis 13, dadurch gekennzeichnet, daß die Nutseitenwandungen (7, 8, 27, 28) senkrecht zum Nutgrund (6, 26) verlaufen.

15. Dichtungsvorrichtung nach einem der Ansprüche 1 bis 14, dadurch gekennzeichnet, daß der Abstand zwischen Dichtungsring (10, 30) und Nutgrund (6, 26) geringer ist als die Querschnittserstreckung des Spannrings (11, 31) in radialer Richtung in entspanntem Zustand.


## Claims

1. Seal arrangement (1, 21) for sealing, in particular, against pressurised liquids between parts (2, 4 ; 22, 24) which are movable relative to each other ;

   (a) the seal arrangement (1, 21) has an annular groove (5, 25) with a groove base (6, 26), groove side walls (7, 8 ; 27, 28) and a groove opening (9, 29) ;
   (b) a sealing ring (10, 30), which is preferably composed of PTFE, is inserted in the annular groove (5, 25);
   (c) the sealing ring (10, 30) has a slightly smaller width than the annular groove (5, 25) ;
   (d) the sealing ring (10, 30) has a plurality of sealing lips (12, 13, 14 ; 32, 33, 34) which are arranged adjacently in cross-section and project over the groove opening ;
   (e) a tensioning ring (11, 31) is arranged between the groove base (6, 26) and the sealing ring (10, 30), which tensioning ring exerts a radially inwardly directed tensioning force on the sealing ring (10, 30) ;
   (f) the cross-sectional mid-point of the tensioning ring (11, 31) is offset in relation to that of the sealing ring (10, 30) in the direction of the width of the annular groove (5, 25) ; characterised by the following features:
   (g) the sealing ring (10, 30) has three sealing lips (12, 13, 14 ; 32, 33, 34) ;
   (h) the sealing ring (10, 30) and tensioning ring (11, 31) are designed in such a way that, when they rest on the same groove side wall (8, 28), the two sealing lips (13, 14 ; 33, 34) lying nearest to this groove side wall (8, 28) are in such a position that the force exerted by the tensioning ring (11, 31) is distributed over these two sealing lips (13, 14 ; 33, 34) in essentially equal parts.

2. Seal arrangement according to Claim 1, characterised in that the two outer sealing lips (12, 14 ; 32, 34) are arranged symmetrically to the central sealing lip (13, 33).

3. Seal arrangement according to Claim 1 or 2, characterised in that the tensioning ring (11) is movable between the two groove side walls (7, 8) and, when it rests on each groove side wall (7, 8), the force exerted by it is distributed in each case in essentially equal parts over the two sealing lips (13, 14) lying nearest to this groove side wall (7, 8).

4. Seal arrangement according to one of Claims 1 to 3, characterised in that V-shaped recesses (15, 16, 35) are provided between the sealing lips (12, 13, 14 ; 32, 33, 34).

5. Seal arrangement according to Claim 4, characterised in that the angle between the sealing lips (12, 13, 14 ; 32, 33, 34) is less than 60° when a pressure of up to 100 bar is applied.

6. Seal arrangement according to Claim 4, characterised in that the angle between the sealing lips is greater than 60° when high pressures are applied.

7. Seal arrangement according to one of Claims 4 to 6, characterised in that the medians of the recesses (15, 16 ; 35) converge towards each other.

8. Seal arrangement according to one of Claims 1 to 7, characterised in that the two outer sealing lips (12, 14 ; 32, 34) have outsides which are inclined towards the sealing surface.

9. Seal arrangement according to Claim 8, characterised in that the outsides of the two outer sealing lips (12, 14 ; 32, 34) have a less steep inclination than their insides.

10. Seal arrangement according to one of Claims 1 to 9, characterised in that the central sealing lip (13, 33) projects further than the adjacent sealing lips (12, 14 ; 32, 34).

11. Seal arrangement according to one of Claims 1 to 10, characterised in that the tensioning ring (11, 31) is an annular sealing ring.

12. Seal arrangement according to one of Claims 1 to 11, characterised in that the contact surface of the sealing ring (10, 30) on the tensioning ring (11, 31) extends parallel to the groove base (6, 26).

13. Seal arrangement according to Claim 12, characterised in that the contact surface and the groove base

EP 0 297 450 B1

(6, 26) are of flat construction.

14. Seal arrangement according to one of Claims 1 to 13, characterised in that the groove side walls (7, 8, 27, 28) extend perpendicular to the groove base (6, 26).

15. Seal arrangement according to one of Claims 1 to 14, characterised in that the distance between the sealing ring (10, 30) and the groove base (6, 26) is less than the cross-sectional extension of the tensioning ring (11, 31) in the radial direction in the unloaded state.

## Revendications

1. Dispositif d'étanchéité (1, 21) pour assurer notamment l'étanchéité à des fluides sous pression, entre des parties constitutives (2, 4 ; 22, 24) animées de mouvements relatifs ;

(a) le dispositif d'étanchéité (1, 21) présente une gorge annulaire (5, 25) comprenant un fond (6, 26), des parois latérales (7, 8 ; 27, 28) et un orifice (9, 29) ;

(b) une bague d'étanchement (10, 30), consistant de préférence en du PTFE, est encastrée dans la gorge annulaire (5, 25) ;

(c) la bague d'étanchement (10, 30) est sensiblement d'une moindre largeur que la gorge annulaire (5, 25);

(d) la bague d'étanchement (10, 30) comporte plusieurs lèvres d'étanchement (12, 13, 14 ; 32, 33, 34) qui sont juxtaposées en coupe transversale, et font saillie au-delà de l'orifice de la gorge ;

(e) une bague de serrage (11, 31), interposée entre le fond (6, 26) de la gorge et la bague d'étanchement (10, 30), applique à ladite bague d'étanchement (10, 30) une force de serrage dirigée radialement vers l'intérieur ;

(f) le centre de la section transversale de la bague de serrage (11, 31) est décalé de celui de la bague d'étanchement (10, 30) dans le sens de la largeur de la gorge annulaire (5, 25) ; caractérisé par les particularités suivantes :

(g) la bague d'étanchement (10, 30) comprend trois lèvres d'étanchement (12, 13, 14 ; 32, 33, 34) ;

(h) la bague d'étanchement (10, 30) et la bague de serrage (11, 31) sont configurées de telle sorte que, lorsqu'elles sont appliquées contre la même paroi latérale (8, 28) de la gorge, les deux lèvres d'étanchement (13, 14 ; 33, 34) les plus rapprochées de cette paroi latérale (8, 28) de la gorge occupent une position telle que la force, appliquée par la bague de serrage (11, 31), soit pour l'essentiel distribuée en parts égales sur ces deux lèvres d'étanchement (13, 14 ; 33, 34).

2. Dispositif d'étanchéité selon la revendication 1, caractérisé par le fait que les deux lèvres extérieures d'étanchement (12, 14 ; 32, 34) sont agencées symétriquement par rapport à la lèvre centrale d'étanchement (13, 33).

3. Dispositif d'étanchéité selon la revendication 1 ou 2, caractérisé par le fait que la bague de serrage (11) est mobile entre les deux parois latérales (7, 8) de la gorge et, lorsqu'elle est appliquée contre chaque paroi latérale (7, 8) de la gorge, la force qu'elle applique est à chaque fois distribuée, pour l'essentiel en parts égales, sur les deux lèvres d'étanchement (13, 14) les plus rapprochées de cette paroi latérale (7, 8) de la gorge.

4. Dispositif d'étanchéité selon l'une des revendications 1 à 3, caractérisé par le fait que des évidements (15, 16, 35) configurés en V sont prévus entre les lèvres d'étanchement (12, 13, 14 ; 32, 33, 34).

5. Dispositif d'étanchéité selon la revendication 4, caractérisé par le fait que l'angle compris entre les lèvres d'étanchement (12, 13, 14 ; 32, 33, 34) est inférieur à 60° lors d'une sollicitation atteignant jusqu'à 100 bars.

6. Dispositif d'étanchéité selon la revendication 4, caractérisé par le fait que l'angle compris entre les lèvres d'étanchement est supérieur à 60° lors d'une sollicitation par de fortes pressions.

7. Dispositif d'étanchéité selon l'une des revendications 4 à 6, caractérisé par le fait que les bissectrices des évidements (15, 16 ; 35) convergent mutuellement.

8. Dispositif d'étanchéité selon l'une des revendications 1 à 7, caractérisé par le fait que les deux lèvres extérieures d'étanchement (12, 14 ; 32, 34) possèdent des faces externes inclinées en direction de la surface d'étanchement.

9. Dispositif d'étanchéité selon la revendication 8, caractérisé par le fait que les faces externes des deux lèvres extérieures d'étanchement (12, 14 ; 32, 34) ont une inclinaison moins accentuée que celle de leurs faces internes.

10. Dispositif d'étanchéité selon l'une des revendications 1 à 9, caractérisé par le fait que la lèvre centrale d'étanchement (13, 33) fait saillie par rapport aux lèvres d'étanchement voisines (12, 14 ; 32, 34).

11. Dispositif d'étanchéité selon l'une des revendications 1 à 10, caractérisé par le fait que la bague de serrage (11, 31) est une bague torique.

12. Dispositif d'étanchéité selon l'une des revendications 1 à 11, caractérisé par le fait que la surface de contact de la bague d'étanchement (10, 30), sur la bague de serrage (11, 31), s'étend parallèlement au fond (6, 26) de la gorge.

13. Dispositif d'étanchéité selon la revendication 12, caractérisé par le fait que la surface de contact et le fond (6, 26) de la gorge sont de réalisation plane.

14. Dispositif d'étanchéité selon l'une des revendications 1 à 13, caractérisé par le fait que les parois latérales (7, 8, 27, 28) de la gorge s'étendent perpendiculairement au fond (6, 26) de ladite gorge.

15. Dispositif d'étanchéité selon l'une des revendications 1 à 14, caractérisé par le fait que l'espacement, entre la bague d'étanchement (10, 30) et le fond (6, 26) de la gorge, est moindre que l'étendue de la section transversale de la bague de serrage (11, 31) dans le sens radial, à l'état soulagé.

Fig. 1

Fig. 2